# EUROPÄISCHE PATENTSCHRIFT

(11) **EP 4 069 465 B1**
(45) Veröffentlichungstag und Bekanntmachung des Hinweises auf die Patenterteilung: **02.07.2025**
(21) Anmeldenummer: 20820101.2
(22) Anmeldetag: 03.12.2020
(51) Int. Cl.: B24C 11/00, B24C 1/04, C22C 38/00, C22C 38/18, C22C 38/22, C22C 38/36, C22C 38/40, C22C 38/44

(54) **ABRASIV ZUM STRAHLSCHNEIDEN**
ABRASIVES FOR JET CUTTING
ABRASIFS POUR DÉCOUPE PAR JET

(30) Priorität: 04.12.2019 DE 102019133017
(43) Veröffentlichungstag der Anmeldung: 12.10.2022
(73) Patentinhaber: Vulkan Inox GmbH, 45525 Hattingen (DE)
(72) Erfinder: HIDDE, Marc, 58256 Ennepetal (DE); HAHN, André, 45527 Hattingen (DE)
(74) Vertreter: Michalski Hüttermann & Partner Patentanwälte mbB
(86) Internationale Anmeldenummer: PCT/EP2020/084384
(87) Internationale Veröffentlichungsnummer: WO 2021/110800

(56) Entgegenhaltungen:
- EP-B1- 2 892 690
- WO-A1-2017/150655
- JP-A- 2002 317 203
- US-A1- 2006 223 422
- US-A1- 2018 202 049
- VULKAN: "GRITTAL GH", 1 October 2015 (2015-10-01), XP055773818, Retrieved from the Internet <URL:https://www.vulkan-inox.de/index.php/en/Grittal-GH.html?file=files/theme_files/downloads/Datenblaetter/Datenblatt%20GRITTAL%20GH%20EN.pdf> [retrieved on 20210209]

## Beschreibung

Die vorliegende Erfindung betrifft ein Abrasiv zum Strahlschneiden, eine Suspension zum Strahlschneiden, sowie die Verwendung des Abrasivs zum Strahlschneiden.

Strahlschneiden ist an sich bekannt und wird angewendet zum Schneiden bzw. Durchtrennen verschiedener Werkstoffe. Das Strahlschneiden ist keiner Fertigungsverfahren-Norm zugeordnet, wird jedoch aufgrund des Abtragsprinzips gerne der DIN 8200 unter dem Oberbegriff Strahlen bzw. Strahlspanen eingeordnet. Je nach Beanspruchung muss jedoch zwischen den verschiedenen Strahlsystemen unterschieden werden und es kann nicht mit dem klassischen Strahlverfahren zur Oberflächenbearbeitungen verglichen werden. Wesentliche Unterschiede liegen in den Geschwindigkeiten des Strahlmittels, dass auf die Oberfläche gelenkt wird. Bei klassischen Oberflächenbearbeitungen liegen diese bei bis zu 160m/s; im Vergleich zum Strahlschneiden werden Geschwindigkeiten des Abrasivs von ≥ 500m/s und mehr erreicht. Zusätzlich liegen wesentliche Unterschiede in dem Aufprallwinkel des Abrasivs auf die Oberfläche des Strahlguts. Bei den klassischen Strahlverfahren zur Oberflächenbearbeitung werden flache Winkel bzw. kleiner als 90° angestrebt um möglichst keine Rückpralleffekt, sowie eine Abrasion durch, Mikrozerspanung der Oberfläche zu erzielen. Im Vergleich zu dem Strahlspanen wird das Abrasiv in einem Winkel von 90° auf die Oberfläche gelenkt und führt zu Schlag bzw. Prallverschleiß, der zur Erosionsabtragung führt. Die Abrasive zur Materialtrennung müssen wesentlich höhere Anforderung standhalten, als diese für die klassischen Strahlverfahren zur Oberflächenbearbeitung erforderlich sind. Diese sind insbesondere durch die hohen Aufprallgeschwindigkeiten und der damit verbundenen Schlagbelastungen begründet. Des Weiteren muss das Abrasiv die Werkstoffoberfläche direkt erodieren und darf nahezu keine Rückpralleffekte aufzeigen.. Im Vergleich zu anderen Schneidmethoden wie Laserstrahlschneiden oder Plasmaschneiden ist Strahlschneiden ein nichtthermisches Schneidverfahren. Besonders verbreitet ist neben Trockenstrahlschneiden das Wasserstrahlschneiden, bei dem Wasser durch eine Düse unter hohem Druck auf den Werkstoff geleitet wird und diesen erodiert. Zur Verbesserung der Schneidleistung und Qualität des Schnittes können beim Trockenstrahlschneiden und Wasserstrahlschneiden Abrasive dem Schneidprozess zugefügt werden. Abrasive können verschiedene Materialien mit vorzugsweise hoher Härte sein.

Als Hauptanwendungsabrasiv werden üblicherweise Granate, Olivinsand oder Korund dem Prozess zugefügt. Der Vorteil dieser Granate, Olivinsand oder Korund besteht darin, dass diese naturbedingt eine hohe Härte von 6,5-9 Mohs, das entspricht etwa 1120-2060 HV, aufweisen. Des Weiteren liegen diese Mineralien u.a. in einem Kubischen Gitter mit einer Hexakisoktaedrischen Struktur vor. Das führt dazu, dass diese Mineralien eine scharfe splittrige/ kantige Form aufweisen, die zum Abtrag und für Schneidprozesse mit einer guten Leistung Anwendung finden.

Auf Grund der hohen Härte sind diese Materialien jedoch sehr spröde und anfällig für Stoß und Druckbelastungen, wodurch als Beispiel das Granat im Anwendungsfall sehr schnell spröde bricht und nur durch erhöhten Aufwand wiederverwendet werden kann bzw. aufgrund des Brechens ein hoher Verlust vorliegt. Die Wiederverwertbarkeit von Granat liegt üblicherweise bei 2 bis höchsten 3 Zyklen.

EP 2 892 690 A1 beschreibt ein Verfahren und ein Strahlmittel zur Herstellung einer satinierten Oberfläche auf einem Aluminiumsubstrat wobei als Strahlmittel eine Mischung aus kantigen und kugeligen Partikeln mit einem Korndurchmesser D 90< 0,3 mm verwendet wird und ein Abrasiv aus rostfreiem Stahl umfasst.

US 2006/223422 A1 beschreibt einen Schneidkopf mit mindestens einer ersten und einer zweiten Mischstufe. Ferner wird eine Suspension umfassend einen rostfreien Stahl als Abrasiv zum Strahlschneiden beschrieben.

JP 2002 31720 3A beschreibt eine Zusammensetzung mit martensitischem Edelstahl, wobei der Hauptbestandteil Fe ist, und die Zusammensetzung außerdem 0,35 bis 0,8 Massen-% C und 8 bis 20 Massen-% Cr enthält. Weiterhin gilt, dass der Gehalt von C als WC (Masse-%), von Cr als WCr (Masse-%), von Mo als WMo (Masse-%), von Si als WSi (Masse-%), von Mn als WMn (Masse-%) und von Ni als WNi (Masse-%) definiert ist und M=538-317WC-33WMn-28WCr-17WNi-11WSi-11WMo sowie P=WCr+3,3WMo definiert sind. Der Wert von Mist ≥15 und der Wert von P ist ebenfalls ≥8.

Abrasive können demnach noch Verbesserungspotential bieten. Verbesserungspotential kann sich dabei insbesondere in der Zeitstandfestigkeit und der Wiederverwertbarkeit bieten.

Es ist daher die Aufgabe der vorliegenden Erfindung, verbesserte Abrasive zum Strahlschneiden bereitzustellen.

Gelöst wird diese Aufgabe durch das Abrasiv zum Strahlschneiden gemäß Anspruch 1 sowie ferner durch die Suspension zum Strahlschneiden nach Anspruch 9 und die Verwendung des Abrasivs zum Strahlschneiden nach Anspruch 10. Bevorzugte Ausgestaltungen der Erfindung sind in den Unteransprüchen angegeben.

Mit der Erfindung wird ein Abrasiv zum Strahlschneiden vorgeschlagen, aufweisend Partikel aus einem rostfreien Stahl, wobei der rostfreie Stahl aus einem Gefüge besteht, wobei das Gefüge zumindest aufweist:
- Martensit, insbesondere in einem Bereich von ≥ 20 Gew.-% bis < 100 Gew.-%,
- Austenit in einem Bereich von ≥ 5 Gew.-% bis ≤ 50 Gew.-%, und
- Chromcarbid, Chromnitrid und/oder Mischungen davon, zusammen in einem Bereich von ≥ 0 Gew.-% bis ≤ 45 Gew.-%,
   bezogen auf das Gefüge, wobei die Anteile derart gewählt sind, dass sie zusammen 100 Gew.-% bezogen auf das Gefüge betragen;
   wobei der rostfreie Stahl aus einer Legierung besteht, aufweisend:
      - Chrom in einem Bereich von ≥ 10 Gew.-% bis ≤ 35 Gew.-%,
      - Molybdän in einem Bereich von ≥ 0 Gew.-% bis ≤ 3 Gew.-%,
      - Nickel in einem Bereich von ≥ 0 Gew.-% bis ≤ 1 Gew.-%,
      - Kohlenstoff in einem Bereich von ≥ 0 Gew.-% bis ≤ 2,5 Gew.-%,
      - Stickstoff in einem Bereich von ≥ 0 Gew.-% bis ≤ 2,5 Gew.-%,
      - Spurenelemente in einem Bereich von ≥ 0 Gew.-% bis ≤ 1 Gew.-%, und
      - Rest Eisen,
   bezogen auf die Legierung, wobei die Legierung Kohlenstoff und Stickstoff zusammen in einem Bereich von ≥ 0,2 Gew.-% bis ≤ 2,5 Gew.-% bezogen auf die Legierung aufweist.

Unter einem "Abrasiv" ist im Sinne der vorliegenden Erfindung ein dem Strahlschneidemittel zusetzbarer Hilfsstoff zur Verbesserung der Schneidleistung des Strahlschneidens zu verstehen.

Unter "Stahl" ist im Sinne der vorliegenden Erfindung ein Werkstoff zu verstehen, der zum größten Teil aus Eisen besteht.

Unter dem Begriff "rostfrei" ist im Sinne der vorliegenden Erfindung die Eigenschaft zu verstehen, gegenüber Reaktionen mit der Umgebung und/oder der natürlichen Atmosphären im Wesentlichen inert zu sein. Insbesondere ist unter rostfreiem Stahl ein Stahl zu verstehen, der im Wesentlichen bei Normalbedingungen nicht mit der Umgebungsluft und/oder Luftfeuchtigkeit reagiert.

Unter "Gefüge" ist im Sinne der vorliegenden Erfindung die Mikrostruktur des Stahls zu verstehen, also insbesondere die Zusammensetzung des Stahls aus einer Vielzahl von Teilvolumina, von denen jedes hinsichtlich seiner Zusammensetzung und der räumlichen Anordnung seiner Bausteine in Bezug auf ein in den Werkstoff gelegtes ortsfestes Achsenkreuz in erster Näherung homogen ist.

Unter "Martensit" ist im Sinne der vorliegenden Erfindung Stahl mit einer Martensitstruktur zu verstehen. Darunter ist im Sinne der vorliegenden Erfindung die metastabile Modifikation von Stahl in einem tetragonal verzerrten raumzentrierten Gitter zu verstehen, die insbesondere bei der Herstellung von Stahl beim Abkühlen durch Unterschreiten der Martensitstarttemperatur und Umwandlung aus einer Austenitstruktur entsteht.

Unter "Austenit" ist im Sinne der vorliegenden Erfindung Stahl mit einer Austenitstruktur zu verstehen. Darunter ist im Sinne der vorliegenden Erfindung die bei Raumtemperatur metastabile Modifikation von Stahl zu verstehen, die ein kubisch flächenzentriertes Gitter aufweist und insbesondere bei der Herstellung von Stahl bei hohen Temperaturen entsteht und durch unvollständige Umwandlung zu Martensit beim Abkühlen/Abschrecken bestehen bleibt. Unter Austenit ist deshalb im Sinne der vorliegenden Erfindung insbesondere Restaustenit zu verstehen.

Unter "Chromcarbid" sind im Sinne der vorliegenden Erfindung Ausscheidungen im rostfreien Stahl zu verstehen, die im Wesentlichen aus Chrom und Kohlenstoff bestehen. Unter "Chromnitrid" sind im Sinne der vorliegenden Erfindung Ausscheidungen im rostfreien Stahl zu verstehen, die im Wesentlichen aus Chrom und Stickstoff bestehen. Unter Mischungen von "Chromcarbid" und "Chromnitrid" sind im Sinne der vorliegenden Erfindungen sowohl Mischungen von Ausscheidungen aus Chromcarbid und Ausscheidungen aus Chromnitrid zu verstehen, als auch Ausscheidungen aus Mischungen von Chromcarbid und Chromnitrid.

Durch das vorbeschriebene Abrasiv zum Strahlschneiden kann vorteilhafterweise erreicht werden, dass das Abrasiv im Vergleich zu bekannten Abrasiven eine verbesserte Zeitstandfestigkeit und Wiederverwertbarkeit aufweist. Dadurch kann insbesondere die Umwelt geschont werden. Zudem können durch das Abrasiv zum Strahlschneiden beim Strahlschneiden exzellente Schnitte erreicht werden mit guter Schneidgeschwindigkeit. Obwohl das Abrasiv metallisch ist, kann erreicht werden, dass das Abrasiv nicht rostet.

Ohne an eine Theorie gebunden zu sein, dienen die martensitischen Gefügebestandteile zum einen um eine hohe Grundhärte von um 800 HV zu ermöglichen und eine gewisse Sprödigkeit zu erzielen, die beim Brechen von Körnern zu einer scharfen, kantigen Struktur ähnlich eines Granates führt, um eine gute Schneidhaltigkeit und einen guten Abtrag zu erzielen. Austenit, Chromcarbid und Chromnitrid können die Eigenschaften des Martensits dabei optional noch weiter verbessern.

Weiter ohne an eine Theorie gebunden zu sein, ist der Austenit für die Belastung im Schneidprozess vorteilhaft, da durch diese Gefügestruktur in Zusammenhang mit den anderen Gefügebestandteilen weitere Vorteile gegenüber Granaten erzielt werden können. Der Austenit liegt in einem metastabilen Zustand vor und kann bei Belastungen, wie sie durch hohe Drücke oder Verformung beim Schneidprozess auftreten, zuerst verfestigen und ab einer bestimmten Verfestigungsgrenze in spannungsindizierten Martensit umgewandelt werden. Ein austenitisches Gefüge ist aufgrund seines kubisch flächenzentrierten Gitters sehr gut verformbar und bringt eine hervorragende Zähigkeit mit sich und kann Stoßbelastungen sehr gut aufnehmen und abfangen. Dies führt dazu, dass, wenn das erfindungsgemäße Abrasiv Austenit aufweist und belastet wird, das Abrasiv die hohen Stoß-/ Prall- und Druckbelastungen durch den vorhandenen Restaustenit besser abfedern kann. Das Material bricht dadurch nicht unbedingt spröde, sondern verfestigt weiter, bis der Restaustenit zu Martensit umgewandelt ist und kann dann in einen versprödeten Zustand verfallen. Dies ist jedoch vorteilhafterweise erst nach mehrmaligen Wiederverwendungszyklen der Fall. Vorteilhafterweise kann durch den optional bevorzugt vorhandenen Austenit eine durch die Belastung beim Strahlschneiden leicht und stetig ansteigende Verfestigung des Abrasivs entstehen, so dass die Schneidhaltigkeit über mehrere Zyklen stabil bleibt, ohne Qualitätseinbußen des Schnittes zu erhalten.

Weiter ohne an eine Theorie gebunden zu sein, verbessern das optional vorhandene Chromcarbid und/oder Chromnitrid die Langlebigkeit, Schneidhaltigkeit und Wiederverwertbarkeit des Abrasivs weiter. Durch diese Gefügebestandteile kann insbesondere eine noch weiter verbesserte Verschleißfestigkeit erreicht werden. Ferner kann die Härte des Abrasivs durch Chromcarbide und/oder Chromnitride weiter verbessert werden.

Durch die Rostfreiheit des Abrasivs kann vorteilhafterweise erreicht werden, dass bei der Verwendung des Abrasivs in einer Suspension zum Strahlschneiden der Suspension kein Rostschutzmittel beigefügt werden muss. Dadurch kann insbesondere die Umwelt geschont werden und die Aufarbeitung der Anfallenden Suspensionen vereinfacht werden.

Die vorbeschriebene Gefügezusammensetzung kann vorteilhafterweise durch die chemische Zusammensetzung des rostfreien Stahls und optional durch eine Wärmebehandlung des Stahls beeinflusst werden.

In einer Ausgestaltung kann vorgesehen sein, dass der Martensit zumindest teilweise Zwischengefüge umfasst. Demnach kann vorgesehen sein, dass unter Martensit auch eine Mischung aus Martensit und Zwischengefüge zu verstehen ist. Unter "Zwischengefüge" ist im Sinne der Vorliegenden Erfindung das auch unter dem Namen Bainit bekannte Gefüge zu verstehen, welches beim Abkühlen von Austenit entstehen kann.

Bevorzugt kann vorgesehen sein, dass die Anteile des vorbeschriebenen Gefüges derart gewählt sind, dass sie zusammen 100 Gew.-% bezogen auf das Gefüge betragen.

Bevorzugt kann vorgesehen sein, dass das Abrasiv neben den Partikeln aus rostfreiem Stahl andere Abrasive aufweist, beispielsweise metallische oder mineralische Abrasive. Dadurch kann vorteilhafterweise eine Einstellung der Schneideigenschaften und/oder Verschleißeigenschaften erreicht werden.

Bevorzugt kann vorgesehen sein, dass das Abrasiv zum Strahlschneiden die Partikel aus rostfreiem Stahl aufweist in einem Bereich von ≥ 95 Gew.-% bis ≤ 100 Gew.-%, bezogen auf das Gesamtgewicht des Abrasivs zum Strahlschneiden, besonders bevorzugt von ≥ 98 Gew.-% bis ≤ 100 Gew.-%. Dadurch kann vorteilhafterweise erreicht werden, dass das Abrasiv besonders homogene Schneideigenschaften und/oder Verschleißeigenschaften aufweist.

Bevorzugt kann vorgesehen sein, dass das Gefüge Chromcarbid, Chromnitrid und/oder Mischungen davon zusammen in einem Bereich von ≥ 3 Gew.-% bis ≤ 35 Gew.-% bezogen auf das Gefüge aufweist, vorzugsweise ≥ 10 Gew.-% bis ≤ 30 Gew.-%, insbesondere ≥ 24 Gew.-% bis ≤ 28 Gew.-%.

Dadurch kann vorteilhafterweise erreicht werden, dass das Abrasiv eine weiter verbesserte Verschleißfestigkeit bzw. Schneidhaltigkeit aufweist. Ferner kann dadurch vorteilhafterweise erreicht werden, dass das Abrasiv eine besonders hohe Härte aufweist. Insbesondere kann durch Chromcarbide, Chromnitride und/oder Mischungen davon in dem vorbeschriebenen Bereich gleichzeitig eine ausreichend hohe Härte und ausreichend gute Verschleißeigenschaft bzw. Schneidhaltigkeit erreicht werden.

In einer bevorzugten Ausgestaltung kann vorgesehen sein, dass das Gefüge Chromcarbid in einem Bereich von ≥ 3 Gew.-% bis ≤ 35 Gew.-% bezogen auf das Gefüge aufweist, vorzugsweise ≥ 10 Gew.-% bis ≤ 30 Gew.-%, insbesondere ≥ 24 Gew.-% bis ≤ 28 Gew.-%. In einer alternativen bevorzugten Ausgestaltung kann vorgesehen sein, dass das Gefüge Chromnitrid in einem Bereich von ≥ 3 Gew.-% bis ≤ 35 Gew.-% bezogen auf das Gefüge aufweist, vorzugsweise ≥ 10 Gew.-% bis ≤ 30 Gew.-%, insbesondere ≥ 24 Gew.-% bis ≤ 28 Gew.-%.

Bevorzugt kann vorgesehen sein, dass das das Gefüge Austenit in einem Bereich von ≥ 5 Gew.-% bis ≤ 47 Gew.-% bezogen auf das Gefüge aufweist, vorzugsweise ≥ 15 Gew.-% bis ≤ 40 Gew.-%, insbesondere ≥ 25 Gew.-% bis ≤ 35 Gew.-%.

Dadurch kann vorteilhafterweise erreicht werden, dass das Abrasiv besonders gute Verschleißeigenschaften aufweist. Insbesondere kann dadurch erreicht werden, dass das Abrasiv eine ausreichende Stoßzähigkeit bzw. Prallzähigkeit aufweist, um nicht schnell zu zerbrechen. Gleichzeitig kann durch den vorbeschriebenen Austenitanteil erreicht werden, dass die Härte des Abrasivs nicht übermäßig beeinträchtig wird.

In einer bevorzugten Ausgestaltung kann vorgesehen sein, dass das Gefüge Martensit in einem Bereich von ≥ 20 Gew.-% bis ≤ 75 Gew.-% bezogen auf das Gefüge aufweist, vorzugsweise ≥ 20 Gew.-% bis ≤ 72 Gew.-%.

Bevorzugt kann vorgesehen sein, dass das Gefüge besteht aus:
- Martensit in einem Bereich von ≥ 20 Gew.-% bis ≤ 72 Gew.-%,
- Austenit in einem Bereich von ≥ 5 Gew.-% bis ≤ 47 Gew.-%, und
- Chromcarbid, Chromnitrid und/oder Mischungen davon, zusammen in einem Bereich von ≥ 3 Gew.-% bis ≤ 35 Gew.-%,
bezogen auf das Gefüge, wobei die Anteile derart gewählt sind, dass sie zusammen ≤ 100 Gew.-% bezogen auf das Gefüge betragen.

Der rostfreie Stahl besteht aus einer Legierung, aufweisend:
- Chrom in einem Bereich von ≥ 10 Gew.-% bis ≤ 35 Gew.-%,
- Molybdän in einem Bereich von ≥ 0 Gew.-% bis ≤ 3 Gew.-%,
- Nickel in einem Bereich von ≥ 0 Gew.-% bis ≤ 1 Gew.-%,
- Kohlenstoff in einem Bereich von ≥ 0 Gew.-% bis ≤ 2,5 Gew.-%,
- Stickstoff in einem Bereich von ≥ 0 Gew.-% bis ≤ 2,5 Gew.-%,
- Spurenelemente in einem Bereich von ≥ 0 Gew.-% bis ≤ 1 Gew.-%, und
- Rest Eisen,
bezogen auf die Legierung, wobei die Legierung Kohlenstoff und Stickstoff zusammen in einem Bereich von ≥ 0,2 Gew.-% bis ≤ 2,5 Gew.-% bezogen auf die Legierung aufweist.

Dadurch kann vorteilhafterweise erreicht werden, dass die erfindungsgemäße Gefügezusammensetzung besonders einfach eingestellt werden kann. Es kann beispielsweise erreicht werden, dass die erfindungsgemäße Gefügezusammensetzung bereits nach Abkühlen eines Stahlgusses mit der vorbeschriebenen elementaren Zusammensetzung erreicht wird. Zudem kann vorteilhafterweise erreicht werden, dass die Gefügezusammensetzung durch eine nachgeschaltete Wärmebehandlung vorteilhaft innerhalb des beanspruchten Bereichs weiter eingestellt werden kann. Insbesondere kann erreicht werden, dass ein Stahl mit der vorbeschriebenen Zusammensetzung durch einen Guss bereitgestellt wird und direkt nach Abkühlen und/oder nach einer Wärmebehandlung die erfindungsgemäße Gefügezusammensetzung aufweist. Somit kann vorteilhafterweise durch die vorbeschriebene Zusammensetzung des Stahls eine besonders gute Herstellbarkeit des Abrasivs erreicht werden.

Es ist zu verstehen, dass übliche Verunreinigungen von der Zusammensetzung mit umfasst sind. Vorzugsweise kann vorgesehen sein, dass die Legierung aus den vorbeschriebenen Bestandteilen besteht.

Bevorzugt kann vorgesehen sein, dass die Legierung Kohlenstoff und Stickstoff zusammen in einem Bereich von ≥ 0,6 Gew.-% bis ≤ 2,5 Gew.-% bezogen auf die Legierung aufweist, vorzugsweise ≥ 0,8 Gew.-% bis ≤ 2,3 Gew.-%, besonders bevorzugt ≥ 1,2 Gew.-% bis ≤ 2,1 Gew.-%, insbesondere ≥ 1.8 Gew.-% bis ≤ 2 Gew.-%.

Dadurch kann erreicht werden, dass der Anteil an Chromcarbid, Chromnitrid und Mischungen davon einfach in einem vorteilhaften Bereich gehalten werden kann. Somit kann vorteilhafterweise erreicht werden, dass das Abrasiv eine besonders gute Verschleißfestigkeit bzw. Schneidhaltigkeit bei gleichzeitig besonders hoher Härte aufweist.

Bevorzugt kann vorgesehen sein, dass die Legierung Chrom in einem Bereich von ≥ 15 Gew.-% bis ≤ 33 Gew.-% bezogen auf die Legierung aufweist, vorzugsweise ≥ 20 Gew.-% bis ≤ 31 Gew.-%, insbesondere ≥ 25 Gew.-% bis ≤ 30 Gew.-%.

Es kann durch den vorbeschriebenen Chromanteil erreicht werden, dass der Stahl ausreichend rostfrei ist. Ferner kann erreicht werden, dass der Anteil an Chromcarbid, Chromnitrid und Mischungen davon einfach in einem vorteilhaften Bereich gehalten werden kann. Somit kann vorteilhafterweise erreicht werden, dass das Abrasiv eine besonders gute Verschleißfestigkeit bzw. Schneidhaltigkeit bei gleichzeitig besonders hoher Härte aufweist. Es versteht sich, dass der rostfreie Stahl Chrom, Kohlenstoff und/oder Stickstoff aufweisen kann, ohne notwendigerweise Chromcarbide und/oder Chromnitride im Sinne der vorliegenden Erfindung aufzuweisen.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 0 Gew.-% bis ≤ 2,5 Gew.-%,
- Stickstoff in einem Bereich von ≥ 0 Gew.-% bis ≤ 2,5 Gew.-%,
- Spurenelemente in einem Bereich von ≥ 0 Gew.-% bis ≤ 1 Gew.-%, und
- Rest Eisen,
bezogen auf die Legierung, wobei die Legierung Kohlenstoff und Stickstoff zusammen in einem Bereich von ≥ 0,2 Gew.-% bis ≤ 2,5 Gew.-% bezogen auf die Legierung aufweist.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 0 Gew.-% bis ≤ 2,5 Gew.-%,
- Stickstoff in einem Bereich von ≥ 0 Gew.-% bis ≤ 2,5 Gew.-%, und
- Rest Eisen,
bezogen auf die Legierung, wobei die Legierung Kohlenstoff und Stickstoff zusammen in einem Bereich von ≥ 0,2 Gew.-% bis ≤ 2,5 Gew.-% bezogen auf die Legierung aufweist.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 0,2 Gew.-% bis ≤ 2,5 Gew.-%,
- Spurenelemente in einem Bereich von ≥ 0 Gew.-% bis ≤ 1 Gew.-%, und
- Rest Eisen,
bezogen auf die Legierung.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 0,2 Gew.-% bis ≤ 2,5 Gew.-%, und
- Rest Eisen,
bezogen auf die Legierung.

In einer alternativ bevorzugten Ausgestaltung kann vorgesehen sein, dass der rostfreie Stahl aus einer Legierung besteht, aufweisend:
- Chrom in einem Bereich von ≥ 10 Gew.-% bis ≤ 35 Gew.-%,
- Molybdän in einem Bereich von ≥ 0,5 Gew.-% bis ≤ 1,5 Gew.-%,
- Kohlenstoff in einem Bereich von ≥ 1,1 Gew.-% bis ≤ 2,4 Gew.-%,
- Stickstoff in einem Bereich von ≥ 0,1 Gew.-% bis ≤ 0,4 Gew.-%, und
- Rest Eisen,
bezogen auf die Legierung, wobei die Legierung Kohlenstoff und Stickstoff zusammen in einem Bereich von ≥ 1,5 Gew.-% bis ≤ 2,5 Gew.-% bezogen auf die Legierung aufweist.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Molybdän in einem Bereich von ≥ 0,5 Gew.-% bis ≤ 1,5 Gew.-%,
- Kohlenstoff in einem Bereich von ≥ 1,5 Gew.-% bis ≤ 2,0 Gew.-%,
- Stickstoff in einem Bereich von ≥ 0,2 Gew.-% bis ≤ 0,3 Gew.-%, und
- Rest Eisen,
bezogen auf die Legierung, wobei die Legierung Kohlenstoff und Stickstoff zusammen in einem Bereich von ≥ 1,8 Gew.-% bis ≤ 2,2 Gew.-% bezogen auf die Legierung aufweist.

In einer alternativ bevorzugten Ausgestaltung kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 1,1 Gew.-% bis ≤ 2,4 Gew.-%,
- Stickstoff in einem Bereich von ≥ 0,1 Gew.-% bis ≤ 0,4 Gew.-%, und
- Rest Eisen,
bezogen auf die Legierung, wobei die Legierung Kohlenstoff und Stickstoff zusammen in einem Bereich von ≥ 1,5 Gew.-% bis ≤ 2,5 Gew.-% bezogen auf die Legierung aufweist.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Kohlenstoff in einem Bereich von ≥ 1,5 Gew.-% bis ≤ 2,0 Gew.-%,
- Stickstoff in einem Bereich von ≥ 0,2 Gew.-% bis ≤ 0,3 Gew.-%, und
- Rest Eisen,
bezogen auf die Legierung, wobei die Legierung Kohlenstoff und Stickstoff zusammen in einem Bereich von ≥ 1,8 Gew.-% bis ≤ 2,2 Gew.-% bezogen auf die Legierung aufweist.

In einer alternativ bevorzugten Ausgestaltung kann vorgesehen sein, dass der rostfreie Stahl aus einer Legierung besteht, aufweisend:
- Chrom in einem Bereich von ≥ 10 Gew.-% bis ≤ 35 Gew.-%,
- Molybdän in einem Bereich von ≥ 0,5 Gew.-% bis ≤ 1,5 Gew.-%,
- Kohlenstoff in einem Bereich von ≥ 1,0 Gew.-% bis ≤ 2,5 Gew.-%, und
- Rest Eisen,
bezogen auf die Legierung.

Bevorzugt kann vorgesehen sein, dass der rostfreie Stahl aus einer Legierung besteht, aufweisend:
- Chrom in einem Bereich von ≥ 10 Gew.-% bis ≤ 35 Gew.-%,
- Molybdän in einem Bereich von ≥ 0,5 Gew.-% bis ≤ 1,5 Gew.-%,
- Kohlenstoff in einem Bereich von ≥ 1,7 Gew.-% bis ≤ 2,2 Gew.-% und
- Rest Eisen,
bezogen auf die Legierung.

Bevorzugt kann vorgesehen sein, dass die Partikel aus rostfreiem Stahl einen Äquivalentdurchmesser D₉₀ aufweisen in einem Bereich von ≥ 0,01 mm bis ≤ 1 mm, vorzugsweise ≥ 0,05 mm bis ≤ 0,4 mm, insbesondere ≥ 0,09 mm bis ≤ 0,315 mm, alternativ vorzugsweise ≥ 0,01 mm bis ≤ 0,5 mm, insbesondere ≥ 0,01 mm bis ≤ 0,2 mm.

Unter "Äquivalentdurchmesser" wird im Sinne der vorliegenden verstanden, dass eine Kugel mit dem gleichen Durchmesser die gleichen durchmesserspezifischen Eigenschaften aufweist. Insbesondere wird unter dem Äquivalentdurchmesser der durch Siebung nach DIN 66165-2:2016-08 bestimmte Äquivalentdurchmesser verstanden. Unter dem "Äquivalentdurchmesser D₉₀" ist im Sinne der vorliegenden Erfindung zu verstehen, dass 90 Gew.-% einer Probe einen Äquivalentdurchmesser aufweisen, der kleiner oder gleich dem "Äquivalentdurchmesser D₉₀" ist.

Mit Partikeln in dem vorbeschriebenen Äquivalentdurchmesserbereich kann vorteilhafterweise erreicht werden, dass das Abrasiv sich gut suspendieren lässt und in einem besonders dünnen Schneidstrahl verwendet werden kann. Ferner können mit derartigen Partikeln eine besonders gute Standzeit und Schneidleistung erreicht werden.

Bevorzugt kann vorgesehen sein, dass die Partikel aus rostfreiem Stahl eine Härte aufweisen in einem Bereich von ≥ 600 HV 0,2 bis ≤ 1000 HV 0,2, vorzugsweise von ≥ 700 HV 0,2 bis ≤ 900 HV 0,2, insbesondere von ≥ 780 HV 0,2 bis ≤ 830 HV 0,2. Insbesondere ist die Härte gemessen nach DIN EN ISO 6507-1:2018-07.

Im Vergleich zu den bekannten eingesetzten Abrasiven, zeichnet sich das vorgestellte Abrasiv durch eine zähe Grundmatrix mit harten Carbiden aus. Durch die guten Zähigkeitseigenschaften können hohe Schlag- bzw. Druckbelastungen, die insbesondere beim Zusammentreffen des Abrasivs auf den Hochdruckwasserstrahl, sowie beim Auftreffen des Abrasivs auf die Werkstoffoberfläche auftreten standhalten. Durch die vorbeschriebene Härte, sowie durch die vorhandenen Carbiden kann erreicht werden, dass das Abrasiv eine besonders gute Schneidleistung hervorruft. Zugleich kann dadurch erreicht werden, dass das Abrasiv auf Grund der Gefügezusammensetzung vorteilhafterweise im Vergleich zu Abrasiven mit ähnlicher Härte erst nach mehreren Verwendungszyklen zerfällt. Dadurch kann vorteilhafterweise eine besonders gute Wiederverwendbarkeit des Abrasivs erreicht werden.

Bevorzugt kann vorgesehen sein, dass das Abrasiv eine Schüttdichte in einem Bereich von ≥ 3,5 g/cm³ bis ≤ 5 g/cm³, bevorzugt von ≥ 3,6 g/cm³ bis ≤ 4,0 g/cm³. Insbesondere ist die Schüttdichte gemessen nach DIN ISO 697:1984-01.

Bevorzugt kann vorgesehen sein, dass die Partikel ausgewählt sind aus Schrot, Drahtkorn, Grit und Mischungen davon, wobei die Partikel vorzugsweise Grit sind.

Unter "Schrot" ist dabei im Sinne der vorliegenden Erfindung im Wesentlichen Kugelförmige Partikel zu verstehen. Unter "Drahtkorn" im Sinne der vorliegenden Erfindung im Wesentlichen Zylinderförmige Partikel zu verstehen. Ferner sind unter Grit im Wesentlichen kantige und irreguläre Partikel zu verstehen.

Durch die vorbeschriebenen Partikel lassen sich besonders gute Schneidleistungen erzielen. Es hat sich herausgestellt, dass mit Grit eine ganz besonders gute Schneidleistung durch das Abrasiv erreicht werden kann.

Mit der Erfindung wird ferner eine Suspension zum Strahlschneiden vorgeschlagen, wobei die Suspension zumindest ein vorbeschriebenes Abrasiv zum Strahlschneiden und ein Suspensionsmittel, vorzugsweise Wasser, aufweist.

Bevorzugt kann vorgesehen sein, dass die Suspension das Suspensionsmittel, insbesondere das Wasser, und das Abrasiv in einem Gewichtsverhältnis vom Suspensionsmittel zum Abrasiv in einem Bereich aufweist von größer oder gleich 9:1 bis kleiner oder gleich 23:1, bevorzugt von größer oder gleich 11:1 bis kleiner oder gleich 19:1, mehr bevorzugt größer oder gleich 12 bis kleiner oder gleich 16:1, besonders bevorzugt von größer oder gleich 13,5:1 bis kleiner oder gleich 14,5:1.

Dadurch kann vorteilhafterweise erreicht werden, dass die Schnittgeschwindigkeit beim Strahlschneiden mit der Suspension besonders gut einstellbar ist und hohe Schneidleistungen erzielt werden können.

Bevorzugt kann vorgesehen sein, dass die Suspension kein Rostschutzmittel enthält.

Dadurch kann vorteilhafterweise erreicht werden, dass eine umweltfreundliche Aufarbeitung der Suspension ermöglicht wird.

Bevorzugt kann vorgesehen sein, dass die Suspension ein Additiv aufweist, bevorzugt ein Additiv zur Stabilisierung der Suspension. Weiter bevorzugt kann vorgesehen sein, dass das Additiv ein Polymer umfasst, bevorzugt ein homopolymer, besonders bevorzugt Stärke.

In einer bevorzugten Ausgestaltung kann vorgesehen sein, dass die Suspension Wasser als Suspensionsmittel und Stärke als Additiv aufweist, bevorzugt in einem Gewichtsverhältnis von Wasser zu Stärke in einem Bereich von größer oder gleich 120:2 bis kleiner oder gleich 120:0,5, beispielsweise von 120:1.

Ferner wird mit der Erfindung die Verwendung eines vorbeschriebenen Abrasivs zum Strahlschneiden zum Schneiden eines Werkstücks vorgeschlagen. Darunter ist zu verstehen, dass das vorbeschriebene Abrasiv zum Strahlschneiden verwendet wird, indem es mit hoher Geschwindigkeit auf ein zu zerschneidendes Werkstück geführt wird, wobei es das Werkstück durch Mikrozerspanung zerschneidet.

Bevorzugt kann vorgesehen sein, dass das Abrasiv verwendet wird in einer vorbeschriebenen Suspension bei einem Arbeitsdruck ein einem Bereich von größer oder gleich 1000 bar bis kleiner oder gleich 6000 bar, bevorzugt größer oder gleich 3000 bar bis kleiner oder gleich 6000 bar.

Durch die vorbeschriebenen Arbeitsdrücke können besonders gute Schneidleistungen erreicht werden. Überraschenderweise konnte gezeigt werden, dass das Abrasiv bei der Verwendung im Bereich dieser Arbeitsdrücke trotz dessen hoher Härte eine im Vergleich zu bekannten Abrasiven zum Strahlschneiden eine besonders hohe Wiederverwendbarkeit aufweist.

Bevorzugt kann vorgesehen sein, dass das Abrasiv verwendet wird mit einer Geschwindigkeit beim Auftreffen auf das Werkstück in einem Bereich von größer oder gleich 500 m/s bis kleiner oder gleich 600 m/s, bevorzugt größer oder gleich 550 m/s bis kleiner oder gleich 650 m/s.

Überraschenderweise konnte gezeigt werden, dass beim Auftreffen auf das Werkstück mit der vorbeschriebenen Geschwindigkeit das vorbeschriebene Abrasiv eine gute Schneidleistung erbringt und zugleich eine gute Wiederverwertbarkeit erlaubt. Insbesondere konnte gezeigt werden, dass das Abrasiv beim Auftreffen mit der vorbeschriebenen Geschwindigkeit den hohen Stoß- bzw. Druckbelastungen standhält und die Eigenschaften und insbesondere Korngröße über mehrere Zyklen stabil bleibt, ohne Qualitätseinbußen des Schnittes zu erhalten.

Weitere Vorteile und vorteilhafte Ausgestaltungen des erfindungsgemäßen Abrasivs zum Strahlschneiden sind durch die Beispiele und Figuren veranschaulicht und in der nachfolgenden Beschreibung erläutert. Dabei ist zu beachten, dass die Beispiele und Figuren nur beschreibenden Charakter haben und nicht dazu gedacht ist, die Erfindung in irgendeiner Form einzuschränken.

### Beispiel 1

Es wurde ein Abrasiv zum Strahlschneiden bereitgestellt. Dieses wies Partikel aus einem rostfreien Stahl auf. Der rostfreie Stahl bestand aus einem Gefüge, wobei das Gefüge 72 Gew.-% Martensit, 25 Gew.-% Austenit und 3 Gew.-% Chromcarbid aufwies. Der rostfreie Stahl bestand aus einer Legierung aufweisend 0,8 Gew.-% Kohlenstoff, 15 Gew.-% Chrom und Rest Eisen. Er wies eine Härte in einem Bereich von 600-740 HV auf. Das Abrasiv wies gute Trenneigenschaften und eine gute Zähigkeit auf. Im Vergleich zu Granat wies das Abrasiv aus Beispiel 1 auch gute Verschleißeigenschaften bzw. eine gute Schneidhaltigkeit auf. Ohne an eine Theorie gebunden zu sein, konnten zwar aufgrund des hohen Martensitanteils gute Schneideigenschaften erreicht werden, jedoch waren die Verschleißeigenschaften im Vergleich zu Abrasiven mit höherem Chromcarbidanteil geringer.

### Beispiel 2

Es wurde ein Abrasiv zum Strahlschneiden bereitgestellt. Dieses wies Partikel aus einem rostfreien Stahl auf. Der rostfreie Stahl bestand aus einem Gefüge, wobei das Gefüge 44 Gew.-% Martensit, 30 Gew.-% Austenit und 26 Gew.-% Chromcarbid aufwies. Der rostfreie Stahl bestand aus einer Legierung aufweisend 2 Gew.-% Kohlenstoff, 30 Gew.-% Chrom und Rest Eisen. Er wies eine Härte um 800 HV auf. Das Abrasiv wies gute Trenneigenschaften und eine gute Zähigkeit auf. Im Vergleich zu Granat und den anderen Beispielen wies das Abrasiv aus Beispiel 2 die besten Verschleißeigenschaften bei sehr guten Schneideigenschaften auf.

### Beispiel 3

Es wurde ein Abrasiv zum Strahlschneiden bereitgestellt. Dieses wies Partikel aus einem rostfreien Stahl auf. Der rostfreie Stahl bestand aus einem Gefüge, wobei das Gefüge 18 Gew.-% Martensit, 47 Gew.-% Austenit und 35 Gew.-% Chromcarbid aufwies. Der rostfreie Stahl bestand aus einer Legierung aufweisend 2,5 Gew.-% Kohlenstoff, 35 Gew.-% Chrom und Rest Eisen. Er wies eine Härte von 800-850 HV auf. Das Abrasiv wies noch gute Trenneigenschaften und eine gute Zähigkeit auf. Im Vergleich zu Granat wies das Abrasiv aus Beispiel 3 auch gute Verschleißeigenschaften bzw. eine gute Schneidhaltigkeit auf. Ohne an eine Theorie gebunden zu sein, konnten zwar aufgrund des vergleichsweise hohen Austenitanteils gute Zähigkeitseigenschaften erwartet werden, diese konnten die schlechten Zähigkeitseigenschaften des hohen Anteils an Chromcarbid jedoch kaum kompensieren, weswegen insgesamt schlechtere Ergebnisse als mit dem Abrasiv aus Beispiel 2 erreicht wurden.

### Vergleichsbeispiel

Es wurde Granat als Abrasiv des Vergleichsbeispiels verwendet.

### Lebensdauertest

Das Abrasiv aus Beispiel 2 und dem Vergleichsbeispiel wurden zum Vergleich der Eigenschaften einem Versuch zum Strahlschneiden unterzogen. Es wurden eine Suspension aus dem jeweiligen Abrasiv, Wasser und Stärke bereitgestellt und auf eine 20 mm dicke Platte aus V2A Stahl gestrahlt. Das Strahlen erfolgte bei guter Schneidqualität mit einer Schnittgeschwindigkeit von 25 mm/min, Probendicke von 20 mm, Schnittbreite von 1,0 mm, Neukorn von 300 gr/min, Schnittlänge von 400 mm, einem Abstand der Düse zur Oberfläche der Probe von 7 mm und einem Druck von 3200 bar bei einem Fluss von 3053 L/min. Das Abrasiv wurde aufgefangen und nach jedem Zyklus fraktionierend Gesiebt, so dass eine Siebverteilung erhalten wurde, die eine Verteilung des Äquivalentdurchmessers wiedergibt. Anschließend wurde das Abrasiv zurück in die Strahlschneidemaschine gegeben und für einen nächsten Zyklus verwendet.

Die Ergebnisse der Lebensdauertests sind in den Figuren gezeigt und nachfolgend näher erläutert.

Es zeigen
Fig. 1 die Siebverteilung in Gew.-% gegen die Anzahl der Zyklen des Lebensdauertests eines Abrasivs nach Beispiel 2 im Bereich von 0 bis 20 Zyklen,
Fig. 2 die Siebverteilung in Gew.-% gegen die Anzahl der Zyklen des Lebensdauertests eines Abrasivs nach dem Vergleichsbeispiel, und
Fig. 3 die Siebverteilung in Gew.-% gegen die Anzahl der Zyklen des Lebensdauertests eines Abrasivs nach Beispiel 2 im Bereich von 0 bis 40 Zyklen.

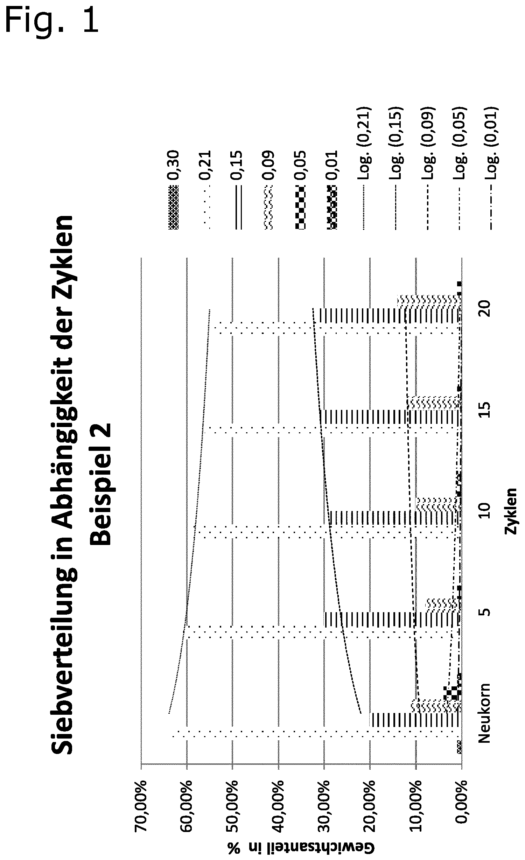

Fig. 1 bis 3 zeigen die Ergebnisse des Lebensdauertests für das Beispiel 2 und das Vergleichsbeispiel. Für das Beispiel 2sind jeweils alle 5 Zyklen die entsprechenden Gewichtsanteile in % der Siebfraktionen als Histogramm angegeben. Für das Vergleichsbeispiel wurden die entsprechenden Gewichtsanteile in % der Siebfraktionen für die ersten 3 Zyklen angegeben. Die Maschenweiten der für die Fraktionierung bei der Siebung verwendeten Siebe sind in mm angegeben. Ferner sind für die prominentesten Fraktionen logarithmische Kurven an die Messdaten angepasst worden und als gestrichelte Linien dargestellt.

Beispiel 2 und das Vergleichsbeispiele wiesen als Neukorn als größte Fraktion mit über 60 Gew.-% die Siebfraktion mit 0,21 mm Maschenweite auf.

Es ist aus Fig 1 zu erkennen, dass die Fraktion aus 0,21 mm Maschenweite des Abrasivs nach Beispiel 2 kaum abnimmt und sogar nach 20 Zyklen noch etwa 55 Gew.-% der Siebfraktionen ausmacht.

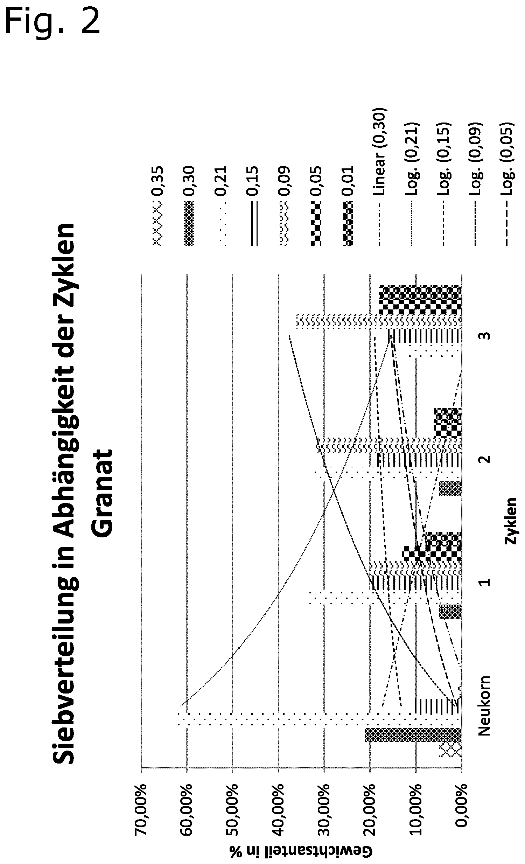

Der vergleichbare Lebensdauertest für Granat nach dem Vergleichsbeispiel, gezeigt in Fig. 2, ergab, dass schon nach einem Zyklus die Fraktion aus 0,21 mm Maschenweite auf unter 35 Gew.-% abgefallen war. Nach 3 Zyklen machte diese Fraktion nur noch etwas über 10 Gew.-% aus, weswegen dieses Abrasiv bereits nach 3 Zyklen nicht mehr weiterverwendet werden konnte.

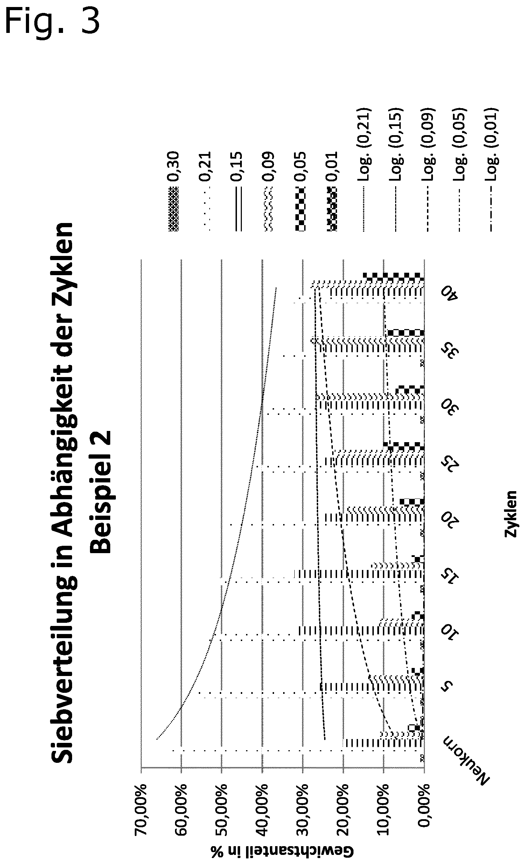

Fig. 3 zeigt einen erweiterten Lebensdauertest für das Abrasiv nach Beispiel 2. Es ist zu erkennen, dass auch nach 40 Zyklen noch immer die Fraktion aus 0,21 mm Maschenweite den größten Anteil ausmacht und das Abrasiv entsprechen immer noch weiterverwendet werden kann.

Im Ergebnis zeigen die erfindungsgemäßen Abrasive eine im Vergleich zu bekannten Abrasiven erheblich verbesserte Zeitstandfestigkeit und Wiederverwertbarkeit.

## Patentansprüche

1. Abrasiv zum Strahlschneiden, aufweisend Partikel aus einem rostfreien Stahl, wobei der rostfreie Stahl aus einem Gefüge besteht, wobei das Gefüge zumindest aufweist:
- Martensit, insbesondere in einem Bereich von ≥ 20 Gew.-% bis < 100 Gew.-%,
- Austenit in einem Bereich von ≥ 5 Gew.-% bis ≤ 50 Gew.-%, und
- Chromcarbid, Chromnitrid und/oder Mischungen davon, zusammen in einem Bereich von ≥ 0 Gew.-% bis ≤ 45 Gew.-%,
bezogen auf das Gefüge, wobei die Anteile derart gewählt sind, dass sie zusammen 100 Gew.-% bezogen auf das Gefüge betragen;
wobei der rostfreie Stahl aus einer Legierung besteht, aufweisend:
- Chrom in einem Bereich von ≥ 10 Gew.-% bis ≤ 35 Gew.-%,
- Molybdän in einem Bereich von ≥ 0 Gew.-% bis ≤ 3 Gew.-%,
- Nickel in einem Bereich von ≥ 0 Gew.-% bis ≤ 1 Gew.-%,
- Kohlenstoff in einem Bereich von ≥ 0 Gew.-% bis ≤ 2,5 Gew.-%,
- Stickstoff in einem Bereich von ≥ 0 Gew.-% bis ≤ 2,5 Gew.-%,
- Spurenelemente in einem Bereich von ≥ 0 Gew.-% bis ≤ 1 Gew.-%, und
- Rest Eisen,
bezogen auf die Legierung, wobei die Legierung Kohlenstoff und Stickstoff zusammen in einem Bereich von ≥ 0,2 Gew.-% bis ≤ 2,5 Gew.-% bezogen auf die Legierung aufweist.

2. Abrasiv zum Strahlschneiden nach Anspruch 1, wobei das Gefüge Chromcarbid, Chromnitrid und/oder Mischungen davon zusammen in einem Bereich von ≥ 3 Gew.-% bis ≤ 35 Gew.-% bezogen auf das Gefüge aufweist, vorzugsweise ≥ 10 Gew.-% bis ≤ 30 Gew.-%, insbesondere ≥ 24 Gew.-% bis ≤ 28 Gew.-%.

3. Abrasiv zum Strahlschneiden nach einem der Ansprüche 1 oder 2, wobei das Gefüge Austenit in einem Bereich von ≥ 5 Gew.-% bis ≤ 47 Gew.-% bezogen auf das Gefüge aufweist, vorzugsweise ≥ 15 Gew.-% bis ≤ 40 Gew.-%, insbesondere ≥ 25 Gew.-% bis ≤ 35 Gew.-%.

4. Abrasiv zum Strahlschneiden nach einem der Ansprüche 1 bis 3, wobei die Legierung Kohlenstoff und Stickstoff zusammen in einem Bereich von ≥ 0,6 Gew.-% bis ≤ 2,5 Gew.-% bezogen auf die Legierung aufweist, vorzugsweise ≥ 0,8 Gew.-% bis ≤ 2,3 Gew.-%, besonders bevorzugt ≥ 1,2 Gew.-% bis ≤ 2,1 Gew.-%, insbesondere ≥ 1.8 Gew.-% bis ≤ 2 Gew.-%.

5. Abrasiv zum Strahlschneiden nach einem der Ansprüche 1 bis 4, wobei die Legierung Chrom in einem Bereich von ≥ 15 Gew.-% bis ≤ 33 Gew.-% bezogen auf die Legierung aufweist, vorzugsweise ≥ 20 Gew.-% bis ≤ 31 Gew.-%, insbesondere ≥ 25 Gew.-% bis ≤ 30 Gew.-%.

6. Abrasiv zum Strahlschneiden nach einem der Ansprüche 1 bis 5, wobei die Partikel aus rostfreiem Stahl einen Äquivalentdurchmesser D₉₀ aufweisen in einem Bereich von ≥ 0,01 mm bis ≤ 1 mm, vorzugsweise ≥ 0,05 mm bis ≤ 0,4 mm, insbesondere ≥ 0,09 mm bis ≤ 0,315 mm, alternativ vorzugsweise ≥ 0,01 mm bis ≤ 0,5 mm, insbesondere ≥ 0,01 mm bis ≤ 0,2 mm.

7. Abrasiv zum Strahlschneiden nach einem der Ansprüche 1 bis 6, wobei die Partikel aus rostfreiem Stahl eine Härte aufweisen in einem Bereich von ≥ 600 HV 0,2 bis ≤ 1000 HV 0,2, vorzugsweise von ≥ 700 HV 0,2 bis ≤ 900 HV 0,2, insbesondere von ≥ 780 HV 0,2 bis ≤ 830 HV 0,2.

8. Abrasiv zum Strahlschneiden nach einem der Ansprüche 1 bis 7, wobei die Partikel ausgewählt sind aus Schrot, Drahtkorn, Grit und Mischungen davon, wobei die Partikel vorzugsweise Grit sind.

9. Suspension zum Strahlschneiden, aufweisend zumindest ein Abrasiv zum Strahlschneiden nach einem der Ansprüche 1 bis 8 und ein Suspensionsmittel, vorzugsweise Wasser.

10. Verwendung eines Abrasivs zum Strahlschneiden nach einem der Ansprüche 1 bis 8 zum Schneiden eines Werkstückes.

## Claims

1. An abrasive for jet cutting comprising particles of a stainless steel, the stainless steel consisting of a microstructure, wherein the microstructure comprises at least:
- martensite, in particular in a range from ≥ 20 wt% to < 100 wt%,
- austenite in a range from ≥ 5 wt% to ≤ 50 wt%, and
- chromium carbide, chromium nitride and/or mixtures thereof, together in a range from ≥ 0 wt% to ≤ 45 wt%,
relative to the microstructure, the proportions being selected such that together they amount to 100 wt% relative to the microstructure;
wherein the stainless steel consists of an alloy, comprising:
- chromium in a range from ≥ 10 wt% to ≤ 35 wt%,
- molybdenum in a range from ≥ 0 wt% to ≤ 3 wt%,
- nickel in a range from ≥ 0 wt% to ≤ 1 wt%,
- carbon in a range from ≥ 0 wt% to ≤ 2.5 wt%,
- nitrogen in a range from ≥ 0 wt% to ≤ 2.5 wt%,
- trace elements in a range from ≥ 0 wt% to ≤ 1 wt%, and
- remainder: iron,
based on the alloy, wherein the alloy contains carbon and nitrogen together in a range from ≥ 0.2 wt% to ≤ 2.5 wt% based on the alloy.

2. An abrasive for jet cutting according to claim 1, wherein the microstructure comprises chromium carbide, chromium nitride and/or mixtures thereof together in a range from ≥ 3 wt% to ≤ 35 wt% based on the microstructure, preferably ≥ 10 wt% to ≤ 30 wt%, in particular ≥ 24 wt% to ≤ 28 wt%.

3. An abrasive for j et cutting according to one of claims 1 or 2, wherein the microstructure comprises austenite in a range from ≥ 5 wt% to ≤ 47 wt% relative to the microstructure, preferably ≥ 15 wt% to ≤ 40 wt%, in particular ≥ 25 wt% to ≤ 35 wt%.

4. An abrasive for jet cutting according to one of claims 1 to 3, wherein the alloy comprises carbon and nitrogen together in a range from ≥ 0.6 wt% to ≤ 2.5 wt% based on the alloy, preferably ≥ 0.8 wt% to ≤ 2.3 wt%, more preferably ≥ 1.2 wt% to ≤ 2.1 wt%, in particular ≥ 1.8 wt% to ≤ 2 wt%.

5. An abrasive for jet cutting according to one of claims 1 to 4, wherein the alloy comprises chromium in a range from ≥ 15 wt% to ≤ 33 wt% relative to the alloy, preferably ≥ 20 wt% to ≤ 31 wt%, in particular ≥ 25 wt% to ≤ 30 wt%.

6. An abrasive for jet cutting according to one of claims 1 to 5, wherein the stainless steel particles have an equivalent diameter D₉₀ in a range from ≥ 0.01 mm to ≤ 1 mm, preferably ≥ 0.05 mm to ≤ 0.4 mm, in particular ≥ 0.09 mm to ≤ 0.315 mm, alternatively preferably ≥ 0.01 mm to ≤ 0.5 mm, in particular ≥ 0.01 mm to ≤ 0.2 mm.

7. An abrasive for jet cutting according to one of claims 1 to 6, wherein the stainless steel particles have a hardness in a range from ≥ 600 HV 0.2 to ≤ 1,000 HV 0.2, preferably from ≥ 700 HV 0.2 to ≤ 900 HV 0.2, in particular from ≥ 780 HV 0.2 to ≤ 830 HV 0.2.

8. An abrasive for jet cutting according to any one of claims 1 to 7, wherein the particles are selected from shot, cut wire shot, grit and mixtures thereof, wherein the particles are preferably grit.

9. A suspension for jet cutting, comprising at least one abrasive for jet cutting according to one of claims 1 to 8 and a suspending agent, preferably water.

10. Use of an abrasive for jet cutting according to any one of claims 1 to 8 for cutting a workpiece.

## Revendications

1. Abrasif pour découpe au jet comprenant des particules en acier inoxydable, celui-ci étant constitué d'une microstructure, celle-ci comprenant au moins :
- de la martensite, en particulier dans une plage de ≥ 20 % en poids à < 100 % en poids,
- de l'austénite, dans une plage de ≥ 5 % en poids à ≤ 50 % en poids, et
- du carbure de chrome, du nitrure de chrome et/ou leurs mélanges, conjointement dans une plage de ≥ 0 % en poids à ≤ 45 % en poids,
par rapport à la microstructure, les proportions étant choisies de telle sorte qu'elles représentent conjointement 100 % en poids par rapport à la microstructure ;
dans lequel l'acier inoxydable est constitué d'un alliage comprenant :
- du chrome dans une plage de ≥ 10 % en poids à ≤ 35 % en poids,
- du molybdène dans une plage de ≥ 0 % en poids à ≤ 3 % en poids,
- du nickel dans une plage de ≥ 0 % en poids à ≤ 1 % en poids,
- du carbone dans une plage de ≥ 0 % en poids à ≤ 2,5 % en poids,
- de l'azote dans une plage de ≥ 0 % en poids à ≤ 2,5 % en poids,
- des traces d'éléments dans une plage de ≥ 0 % en poids à ≤ 1 % en poids, et
- d'autres éléments : fer,
basé sur un alliage, celui-ci contenant du carbone et de l'azote conjointement dans une plage de ≥ 0,2 % en poids à ≤ 2,5 % en poids basé sur l'alliage.

2. Abrasif pour découpe au jet selon la revendication 1, dans lequel la microstructure comprend du carbure de chrome, du nitrure de chrome et/ou des mélanges de ceux-ci conjointement dans une plage de ≥ 3 % en poids à ≤ 35 % en poids sur la base de la microstructure, de préférence ≥ 10 % en poids à ≤ 30 % en poids, en particulier ≥ 24 % en poids à ≤ 28 % en poids.

3. Abrasif pour découpe au jet selon l'une des revendications 1 ou 2, dans lequel la microstructure comprend de l'austénite dans une plage de ≥ 5 % en poids à ≤ 47 % en poids par rapport à la microstructure, de préférence ≥ 15 % en poids à ≤ 40 % en poids, en particulier ≥ 25 % en poids à ≤ 35 % en poids.

4. Abrasif pour découpe au jet selon l'une des revendications 1 à 3, dans lequel l'alliage comprend du carbone et de l'azote conjointement dans une plage de ≥ 0,6 % en poids à ≤ 2,5 % en poids sur la base de l'alliage, de préférence ≥ 0,8 % en poids à ≤ 2,3 % en poids, plus préférablement ≥ 1,2 % en poids à ≤ 2,1 % en poids, en particulier ≥ 1,8 % en poids à ≤ 2 % en poids.

5. Abrasif pour découpe au jet selon l'une des revendications 1 à 4, dans lequel l'alliage comprend du chrome dans une plage de ≥ 15 % en poids à ≤ 33 % en poids par rapport à l'alliage, de préférence ≥ 20 % en poids à ≤ 31 % en poids, en particulier ≥ 25 % en poids à ≤ 30 % en poids.

6. Abrasif pour découpe au jet selon l'une des revendications 1 à 5, dans lequel les particules d'acier inoxydable présentent un diamètre équivalent D₉₀ dans une plage de ≥ 0,01 mm à ≤ 1 mm, de préférence ≥ 0,05 mm à ≤ 0,4 mm, en particulier ≥ 0,09 mm à ≤ 0,315 mm, alternativement de préférence ≥ 0,01 mm à ≤ 0,5 mm, en particulier ≥ 0,01 mm à ≤ 0,2 mm.

7. Abrasif pour découpe au jet selon l'une des revendications 1 à 6, dans lequel les particules d'acier inoxydable présentent une dureté dans une plage de ≥ 600 HV 0,2 à ≤ 1 000 HV 0,2, de préférence de ≥ 700 HV 0,2 à ≤ 900 HV 0,2, en particulier de ≥ 780 HV 0,2 à ≤ 830 HV 0,2.

8. Abrasif pour découpe par jet selon l'une des revendications 1 à 7, dans lequel les particules sont choisies parmi de la grenaille, de la grenaille de fil coupé, du sable et leurs mélanges, les particules étant de préférence sous forme de sable.

9. Suspension pour découpe au jet, comprenant au moins un abrasif pour découpe au jet selon l'une des revendications 1 à 8 et un agent de suspension, de préférence de l'eau.

10. Utilisation d'un abrasif pour découpe au jet selon l'une des revendications 1 à 8 pour la découpe d'une pièce.
